# EUROPEAN PATENT APPLICATION

(11) **EP 4 140 290 A1**
(43) Date of publication of application: **01.03.2023**
(21) Application number: 21793711.9
(22) Date of filing: 12.04.2021
(51) Int. Cl.: A01G 3/02

(54) **ELECTRIC PRUNING SHEARS**

(30) Priority: 21.04.2020 JP 2020075652
(71) Applicant: ARS Corporation, Sakai City, Osaka 599-8267 (JP)
(72) Inventor: TOUDOU Kazuhiro, Sakai City Osaka 599-8267 (JP)
(74) Representative: Plasseraud IP
(86) International application number: PCT/JP2021/015203
(87) International publication number: WO 2021/215291

(57) **Abstract**

Electric pruning shears include: a first blade including a first blade portion that cuts an object to be cut and a first support base portion extended in a direction different from the first blade portion as viewed from the pivot portion; and the second blade including a second blade portion that cuts the object to be cut by sandwiching the object to be cut together with the first blade portion and a second support base portion extended in a direction different from the second blade portion as viewed from the pivot portion. The first blade portion is a convex curved blade with an intermediate portion from the pivot portion side to a distal end convexed, and the second blade portion is a concave curved blade with an intermediate portion from the pivot portion side to a distal end concaved. A bevel angle of the second blade portion gradually becomes obtuse from the pivot portion side to the distal end. At least one of the first support base portion and the second support base portion is connected to a power transmitter that transmits power from a drive source that is electrically driven. With this configuration, electric pruning shears capable of satisfactorily performing cutting without blade slippage even when the object to be cut is a thick branch, thereby making it possible to improve user's satisfaction.

## Description

### Technical Field

The present invention relates to electric pruning shears used for, for example, pruning plants.

### Background Art

Conventionally, various pruning shears have been used for pruning plants. In recent years, pruning shears in which blades electrically operate have also been proposed.

For example, electric pruning shears that perform pruning by causing the blades to operate by driving a motor have been proposed (see Patent Literature 1). The electric pruning shears can adjust the maximum opening angle of the movable blade in three stages by the back-and-forth movement of the trigger, separately from the push-pull action of the trigger that moves the movable blade.

However, in this electric pruning shears, blade slippage easily occurs when seeking to prune thick branches, and the stable pruning cannot be ensured.

### Citation List

### Patent Literature

Patent Literature 1: JP 2017-000322 A

### Summary of Invention

### Technical Problem

In view of the above problems, an object of the present invention is to provide electric pruning shears capable of satisfactorily performing cutting without blade slippage even when the object to be cut is a thick branch, thereby improving user's satisfaction.

### Solution to Problem

The present invention provides electric pruning shears including: a first blade; a second blade; and a pivot portion configured to pivotally support the first blade and/or the second blade in a relatively rotatable manner, in which the first blade includes: a first blade portion that is to be brought into contact with the object to be cut and is configured to cut the object to be cut; and a first support base portion extended in a direction different from the first blade portion as viewed from the pivot portion, the second blade includes: a second blade portion that is to be brought into contact with the object to be cut and is configured to cut the object to be cut by sandwiching the object to be cut together with the first blade portion; and a second support base portion extended in a direction different from the second blade portion as viewed from the pivot portion, the first blade portion is a convex curved blade with an intermediate portion from the pivot portion side to a distal end convexed, the second blade portion is a concave curved blade with an intermediate portion from the pivot portion side to a distal end concaved, a drive source configured to turn at least one of the first support base portion and the second support base portion to relatively open or close the first blade portion and the second blade portion is included, and the second blade portion includes, in at least a part of the second blade portion, a bevel angle changing portion, a bevel angle of which gradually becomes acute with respect to a bevel angle on the distal end side.

### Advantageous Effects of Invention

The present invention provides electric pruning shears capable of satisfactorily performing cutting without blade slippage even when the object to be cut is a thick branch, thereby making it possible to improve user's satisfaction.

### Brief Description of Drawings

FIG. 1 is a longitudinal sectional right side view of electric pruning shears according to the present invention in a state where a movable blade is opened.
FIG. 2 is a longitudinal sectional right side view of the electric pruning shears according to the present invention in a state where the movable blade is closed.
FIG. 3 is a longitudinal sectional perspective view of the electric pruning shears according to the present invention.
FIG. 4 is an enlarged view of a cutting portion of the electric pruning shears according to the present invention.
FIG. 5 is a perspective view of a fixed blade according to the present invention.
FIG. 6 is a set of cross-sectional views of specific positions of the fixed blade according to the present invention.
FIG. 7 is an explanatory view illustrating configurations of fixed blades according to the second to fifth embodiments.
FIG. 8 is a perspective view illustrating a configuration of a fixed blade according to the sixth embodiment.

### Description of Embodiments

Hereinafter, preferred embodiments of the present invention will be described in detail with reference to the accompanying drawings. However, unless otherwise noted in the following description, the description regarding directions and orientations corresponds to the drawings for convenience of providing the description, and does not limit the implementation, the product, and the scope of rights, for example.

### First embodiment

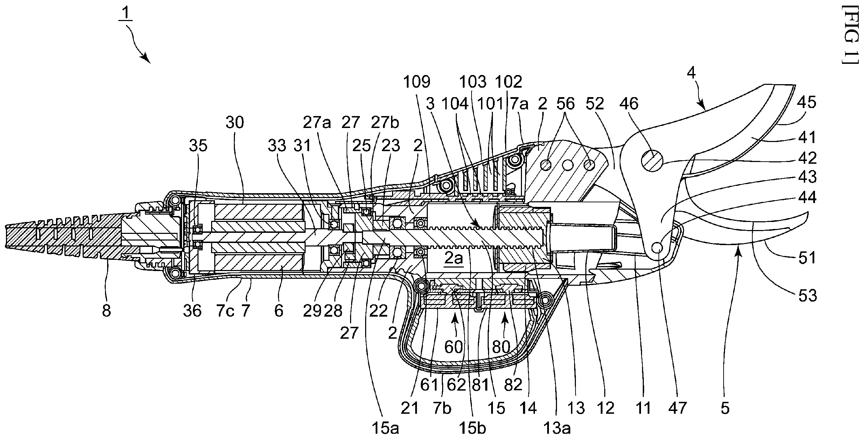

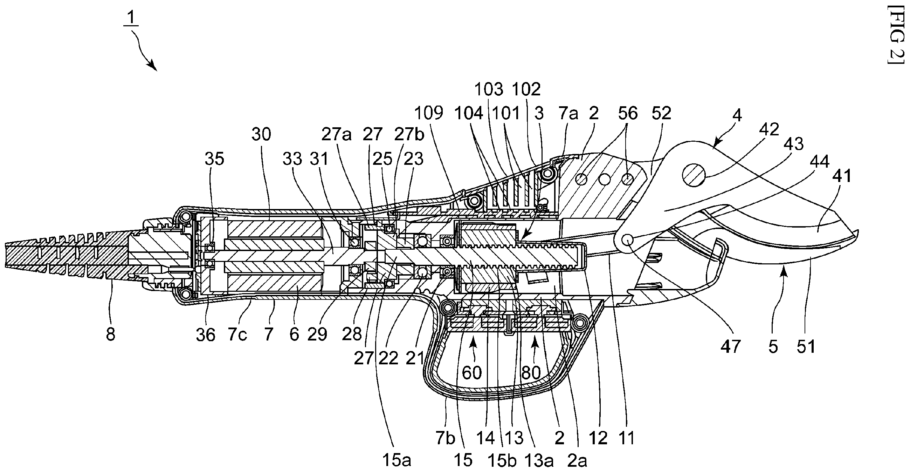

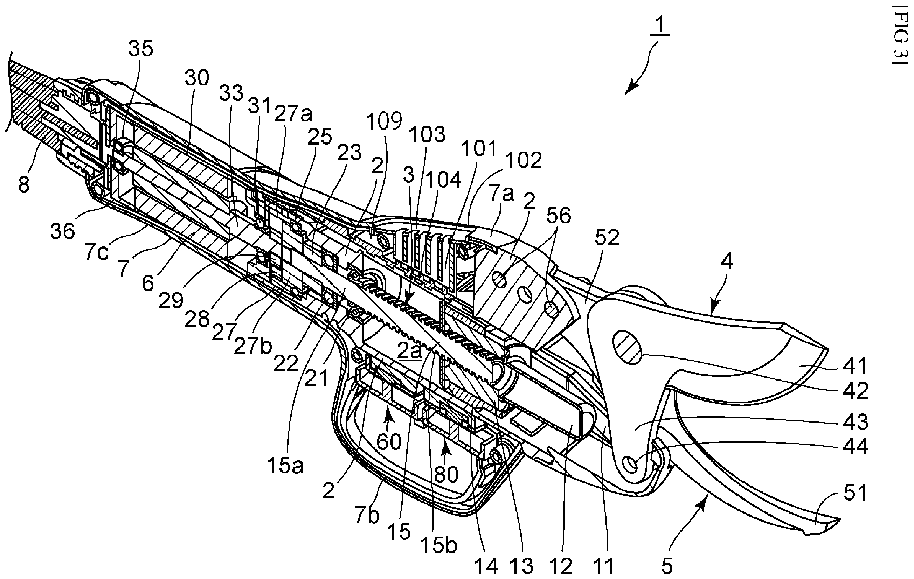

FIG. 1 is a longitudinal sectional right side view of electric pruning shears 1 (an electric cutting device for pruning) according to the present invention when a movable blade 4 is opened, FIG. 2 is a longitudinal sectional right side view of the electric pruning shears 1 when the movable blade 4 is closed, and FIG. 3 is a longitudinal sectional perspective view of the electric pruning shears 1.

As illustrated in FIG. 1, the electric pruning shears 1 include a housing 2 that has a longitudinal shape horizontally long in the drawing, a motor unit 30 connected to one end of the housing 2 in the longitudinal direction, a cover 7 that covers the outer peripheries of the housing 2 and the motor unit 30, a fixed blade 5 that is fixed to the other end of the housing 2 in the longitudinal direction, the movable blade 4 that opens/closes while facing the fixed blade 5, and a power cable 8 having one end connected to the other end of the motor unit 30 different from one end to which the housing 2 is connected. The fixed blade 5 and the movable blade 4 function as a cutting portion for cutting an object.

On the outer periphery of the housing 2, the cutting operation portion 60 (operation portion that receives the first operation) that operates the movable blade 4 and the maximum open position adjusting portion 80 (operation portion that receives the second operation) that adjusts the maximum open position of the movable blade 4 are arranged side by side in the longitudinal direction on a part of the finger side (part of the lower surface portion in the drawing) when gripped by the user. Furthermore, the display 103 is arranged on the palm side (upper surface portion in the drawing that is the other portion with respect to the part) when gripped by the user.

The cutting operation portion 60 includes a trigger button 61 and a press sensor 62 that detects pressing force when the trigger button 61 is pressed by being pushed down. The press sensor 62 includes a sensor such as a piezoelectric sensor capable of outputting pressing force. A deformable body 63 including a deformable material such as a silicon material is provided between the trigger button 61 and the press sensor 62. With this configuration, the load applied from the trigger button 61 is incrementally/decrementally adjusted by pushing down the trigger button 61 by the user and is slowly applied to the press sensor 62, so that the stroke (width of the pressing force) until the press sensor 62 detects ON can be lengthened (widened). The cutting operation portion 60 functions as an operation portion of the first operation (pushing-down operation for closing operation for the purpose of cutting).

Note that the cutting operation portion 60 is not limited to the configuration of the trigger button 61, the press sensor 62, and the deformable body 63. The cutting operation portion 60 can include an appropriate operation detection unit capable of detecting an operation amount of pushing-down, sliding, turning, or the like. Examples of the operation detection unit include: a turn lever and a proximity sensor that detects a degree of proximity of the lever; or a turn lever and a magnetic sensor that detects a turning amount of the lever. In either case, the operation amount can be detected, and the rotation speed of the motor 6 can be changed in accordance with the operation amount to change the speed of the closing operation of the movable blade 4.

The maximum open position adjusting portion 80 is provided adjacent to the front of the cutting operation portion 60 at the lower front of the housing 2. The maximum open position adjusting portion 80 includes a trigger button 81 and a press sensor 82 that detects pressing force when the trigger button 81 is pressed by being pushed down. The press sensor 82 includes a sensor such as a piezoelectric sensor capable of outputting pressing force. A deformable body 83 including a deformable material such as a silicon material is provided between the trigger button 81 and the press sensor 82. With this configuration, the load applied from the trigger button 81 is incrementally/decrementally adjusted by pushing down the trigger button 81 by the user and is slowly applied to the press sensor 82, so that the stroke (width of the pressing force) until the press sensor 82 detects ON can be lengthened (widened). The maximum open position adjusting portion 80 functions as an operation portion that receives second operation different from the first operation (pushing-down operation for the closing operation for the purpose of cutting).

Note that the maximum open position adjusting portion 80 is not limited to the configuration of the trigger button 81, the press sensor 82, and the deformable body 83. The maximum open position adjusting portion 80 can include an appropriate operation detection unit such as: a push-down button and a switch sensor that can detect ON/OFF; a turn lever and a proximity sensor that detects the proximity of the lever; or a turn lever and a magnetic sensor that detects the rotation amount of the lever. In either case, the maximum open position adjusting portion 80 can be used for adjustment (stepwise change) of the maximum release position.

In the present embodiment, by pressing the maximum open position adjusting portion 80 to actuate the internal changeover switch, the user of the electric pruning shears 1 can adjust the maximum open position of the movable blade 4. Specifically, the opening angle (intersection angle α) of the blades at the initial open/close position in a state where the cutting operation portion 60 is not pressed decreases stepwise every time the maximum open position adjusting portion 80 is pressed, and the next of the minimum angle (minimum width between the blade distal ends) is set to the maximum angle (maximum width between the blade distal ends). With this configuration, when a thick object to be cut is cut, the maximum open position of the movable blade 4 can be set to a wide state, and a state where the intersection angle between the movable blade 4 and the fixed blade 5 is wide can be set as the initial cutting position. In addition, when cutting operation portion 60 is operated, the cutting operation can be performed from a state where the movable blade 4 and the fixed blade 5 are maximally opened, making it possible to shear a thick object to be cut. Further, when the thin branch is cut, the branch can be cut by operating the maximum open position adjusting portion 80 to set the initial open/close position into a narrow state, and then by pressing the cutting operation portion 60.

Note that an operation portion that receives second operation different from the first operation (pushing-down operation for the closing operation for the purpose of cutting) is not limited to the maximum open position adjusting portion 80, and may have another configuration. For example, the operation portion that receives the second operation may be configured as follows: the trigger button 61 of the cutting operation portion 60 is operated by double clicking (pushing down it continuously twice) or the like different from the operation of keeping a pushed down state for a predetermined period for the opening/closing operation, whereby the same operation as operation at the time of pushing down the maximum open position adjusting portion 80 once (operation in which the opening angle, i.e., intersection angle α of the blades at the initial open/close position is narrowed by one stage) is executed. Also in this case, the same functions and effects as in the case of including the maximum open position adjusting portion 80 can be obtained.

A control device (not illustrated) is connected to the other end of the power cable 8. The control device performs various types of control of the electric pruning shears 1, and also functions as a battery (power supply unit) that supplies electric power necessary for the operation of the electric pruning shears 1.

The motor unit 30 includes a motor housing 36 formed in a cylindrical shape, and a motor 6 fixed inside the motor housing 36. The motor 6 is provided with a motor shaft 33 passing through the center in parallel with the longitudinal direction of the housing 2.

The motor shaft 33 is pivotally supported in a rotatable manner by a motor shaft bearing 31 on the housing 2 side and a motor shaft bearing 35 on the power cable 8 side. A sun gear 29 having a disk shape and teeth aligned on the outer periphery thereof is fixed to an end portion of the motor shaft 33 on the housing 2 side.

The housing 2 is formed in a substantially cylindrical shape, and has a hollow inside. The housing 2 is provided, on a part of the outer periphery on the side opposite to the motor unit 30 (i.e., a part of the upper surface side), with a protruding fixing portion 56, and a fixed blade support base portion 52 of the fixed blade 5 is fixed to the fixing portion 56.

An inclined portion 102 whose protruding amount gradually decreases toward the motor unit 30 is provided on the motor unit 30 side of the fixing portion 56, and the display 103 is provided at the inclined portion 102.

The display 103 includes a plurality of light emitting diodes (LEDs) 104 arranged at a control board 109 provided inside the housing 2, and a plurality of light guide bodies 101 linearly arranged from a surface of the LEDs 104 to a surface of the inclined portion 102.

The plurality of (five in the present embodiment) LEDs 104 are arranged at equal intervals in the longitudinal direction of the housing 2, and the same number of LEDs 104 are arranged in parallel to each other at intervals. The control board 109 has a substantially rectangular shape, and is arranged at a position close to a columnar space of the housing 2. In the housing 2, a ball screw unit 3 is housed such that the control board 109 is parallel to the longitudinal direction of the housing 2 (the longitudinal direction of the screw shaft 15) and the radial direction of the screw shaft 15 is the thickness direction of the control board 109.

Thus, the display 103 can function as, for example, a remaining power display. In this case, the control board 109 receives an output corresponding to the remaining power of the battery (not illustrated), and can emit light so as to be visually recognizable by the user in such a manner: turning on all the LEDs 104 when the remaining power is the maximum, turning on about half of the LEDs 104 from one end of the plurality of LEDs when the remaining power is half, turning on only one of the LEDs 104 at the one end when the remaining power is small, and turning off all the LEDs 104 when the power is almost exhausted.

In the present embodiment, the number of light emissions of the LEDs 104 at the five locations corresponds to the remaining power of the battery, and the user can know the remaining power of the battery, i.e., the rough remaining operating time of the electric pruning shears 1, on the basis of the number of the light emission.

The control board 109 receives a press signal from the press sensor 62 and a press signal from the press sensor 82, performs control to rotate the motor 6 forward and backward, and performs control to cause the LED 104 to emit light in accordance with the remaining battery level. The control board 109 executes opening/closing operation processing by the operation of the cutting operation portion 60 and initial open/close position switching processing by the operation of the maximum open position adjusting portion 80.

When the trigger button 61 is pressed and receives the press signal from the press sensor 62, the control board 109 that performs the opening/closing operation processing performs closing operation processing of rotating the motor 6 forward at a speed corresponding to the pressing force to close the movable blade 4 with respect to the fixed blade 5. In addition, when the pressing of the trigger button 61 is released and the press signal from the press sensor 62 is lost, the control board 109 performs opening operation processing of rotating the motor 6 backward to return the movable blade 4 to the initial open/close position.

Every time a press signal is received once from the press sensor 82 by the trigger button 81 being pressed, the control board 109 that performs the initial open/close initial position switching processing rotates the motor 6 forward by a predetermined amount to slightly close the movable blade 4 with respect to the fixed blade 5, thereby narrowing the initial open/close position by one stage. The initial open/close position narrows on a stage-by-stage basis until the number of times of pressing of the trigger button 81 reaches a predetermined number of times (e.g., five times) set in advance. When the number of times of pressing of the trigger button 81 exceeds the predetermined number of times, the motor 6 is rotated backward by a predetermined amount to widen the initial open/close position to the maximum opening position.

In the housing 2, a speed reducer 27 connected to the motor shaft 33, and the ball screw unit 3 connected to the speed reducer 27 are arranged in this order from the motor unit 30 side in the longitudinal direction.

The speed reducer 27 includes an output rotor 27b having a substantially disk shape with the axial direction of the screw shaft 15 as the central axis, and a ring-shaped portion 27a arranged on the motor 6 side of the output rotor 27b. The ring-shaped portion 27a is arranged such that the axis of the circle center is positioned on the extension line of the motor shaft 33. The outer periphery of the ring-shaped portion 27a is fixed to the housing 2, and a gear surface is provided on the inner surface of the ring-shaped portion 27a.

The output rotor 27b is fixed to the inside of a bearing 25 whose outer periphery is fixed to the housing 2 so that the output rotor 27b can rotate around a rotation axis on an extension line of the rotating shaft of the motor shaft 33. In the output rotor 27b, three shafts (not illustrated) protruding toward the ring-shaped portion 27a side are provided at equal intervals in parallel with the rotating shaft, and a planetary gear 28 is pivotally supported in a rotatable manner by each shaft.

The outer periphery of the output rotor 27b is fixed to the inside of the bearing 25. The outer periphery of the bearing 25 is fixed to the housing 2. The bearing 25 rotatably supports the output rotor 27b so that the output rotor 27b inside the bearing 25 can rotate around the rotation axis on the extension line of the rotating shaft of the motor shaft 33. The planetary gear 28 engages with the teeth on the outer periphery of the sun gear 29 and the teeth of the gear on the inner surface of the ring-shaped portion 27a, obtains the rotational force of the sun gear 29, and rolls along the teeth on the inner surface of the ring-shaped portion 27a. Since the shaft of the output rotor 27b also moves by this rolling, the output rotor 27b rotates slower than the rotation speed of the sun gear 29.

In the present embodiment, a ball screw drive in which a ball screw is driven by an electric motor is used as the drive unit. The ball screw unit 3 includes a screw shaft 15 and a nut 13. A nut holder 14 provided on the outer periphery of the nut 13, a ball screw cover 12 provided on the fixed blade 5 side, and one end of a link rod 11 (a connecting portion) arranged on the fixed blade 5 side are fixed to the nut 13. Note that the motor 6, the screw shaft 15, the nut 13, and the link rod 11 function as an operation mechanism for opening/closing the movable blade 4 in response to the pushing-down of the trigger button 61.

The screw shaft 15 has a rod shape elongated in the longitudinal direction. The screw shaft 15 is provided with a screw portion 15b on the outer periphery thereof, and is arranged at the center in the longitudinal direction of the housing 2. A base portion 15a having no screw portion 15b is provided at one end of the screw shaft 15 on the motor unit 30 side, and an end portion of the base portion 15a is fixed to the center of the output rotor 27b of the speed reducer 27. Thus, the screw shaft 15 rotates in conjunction with the output rotor 27b of the speed reducer 27.

The base portion 15a of the screw shaft 15 is pivotally supported in a rotatable manner by ball screw bearings 21 and 22 arranged apart from each other in the axial direction so that the base portion 15a can rotate around the rotating shaft on the extension line of the rotating shaft of the motor shaft 33. The outer peripheries of the ball screw bearings 21 and 22 are fixed to the housing 2.

A base nut 23 is provided between the ball screw bearing 22 and the output rotor 27b, and the base nut 23 is positioned so that the interval between the ball screw bearing 22 and the output rotor 27b does not fluctuate. The screw shaft 15 has, in a range from the middle thereof to a distal end thereof on the movable blade 4 side, the screw portion 15b to be screwed with the nut 13.

Since the screw shaft 15 is supported by the output rotor 27b and the ball screw bearings 21 and 22 at three positions in the axial direction, the screw shaft 15 is less shaken, so that stability is improved.

The nut 13 is formed in a cylindrical shape having a hollow inside, and has a screw portion 13a formed on an inner surface thereof. The screw portion 13a of the nut 13 is screwed with the screw portion 15b of the screw shaft 15.

The nut holder 14 has a cylindrical shape, and is fixed to the nut 13 so as to cover the outer periphery of the nut 13. The outer periphery of the nut holder 14 is formed in a cylindrical shape, in which the size of the cylindrical shape is set so that the outer periphery of the nut holder 14 can be slid along a cylindrical slide inner surface 2a of the housing 2 and a gap between the outer periphery of the nut holder 14 and the slide inner surface 2a is minimized.

One of the outer periphery of the nut holder 14 and the slide inner surface 2a of the housing 2 is provided with a slide groove in a longitudinal direction parallel to the screw shaft 15, and the other is provided with a rail protrusion. Since the rail protrusion and the slide groove engage with each other, the nut holder 14 is housed in the housing 2 in a manner in which the nut holder 14 does not rotate in the circumferential direction with respect to the housing 2 but can be slid in the longitudinal direction. With this configuration and the screwing of the screw portion 13a of the nut 13 and the screw portion 15b of the screw shaft 15, when the screw shaft 15 rotates forward and backward, the nut 13 moves back and forth in the longitudinal direction (axial direction) of the screw shaft 15. Alternatively, the nut 13 may also be configured to move back and forth in the axial direction of the screw shaft 15 by the rotation of the screw shaft 15 without providing the slide groove and the rail protrusion.

The ball screw cover 12 has a cylindrical shape with a size capable of receiving the screw shaft 15 inside, and has a hollow inside. The ball screw cover 12 is fixed to the center of the distal end of the nut 13 or the nut holder 14 on the movable blade 4 side, and covers a screw hole of the nut 13.

The ball screw cover 12 protrudes toward the nut holder 14 side in an amount at least longer than the movement distance of the nut 13, and protects, in the entire range in which the nut 13 moves in the longitudinal direction on the speed reducer 27 side by the rotational movement of the screw shaft 15, the screw shaft 15 protruding from the nut 13 toward the movable blade 4 side.

The link rod 11 has a long plate shape with one end in the longitudinal direction pivotally supported by the nut 13, the nut holder 14, or the ball screw cover 12, and the other end is pivotally supported by a drive connection portion 44 of a movable blade body portion 43 of the movable blade 4 by a drive shaft 47. The one end of the link rod 11 is preferably pivotally supported by the nut 13 formed of a metal member.

With this configuration, the link rod 11 transmits the movement in the longitudinal direction of the nut 13 to the drive connection portion 44 of the movable blade 4. In this transmission, the angle of the link rod 11 with respect to the nut 13, the nut holder 14, or the ball screw cover 12, and the angle of the link rod 11 with respect to the movable blade 4 are allowed to fluctuate to some extent due to the fact that the respective pivot portions can independently rotate.

The fixing portion 56 of the housing 2 fixes the fixed blade support base portion 52 of the fixed blade 5. The fixing portions 56 is preferably provided at two or more locations in order to more firmly fix the fixed blade 5.

The cover 7 is formed in a substantially cylindrical shape elongated in the longitudinal direction, and covers the outer peripheries of the housing 2 and the motor unit 30. A rear portion (a rear portion on the motor unit 30 side) of the cover 7, behind the half of the electric pruning shears 1, can be used as a grip portion 7c to be gripped by the user. The cover 7 has, on the upper side in front of the half of the electric pruning shears 1 (on the fixed blade 5 side), an inclined portion 7a that is inclined upward so as to expand toward the distal end.

The inclined portion 7a is provided with the display 103. The cover 7 has, on the lower side (the side opposite to the display 103) in front of the half of the electric pruning shears 1 (on the fixed blade 5 side), a curved rod-shaped operating finger protector 7b so as to surround the cutting operation portion 60 and the maximum open position adjusting portion 80. The operating finger protector 7b has space sufficiently to allow the user to move the finger between the operating finger protector 7b, and the cutting operation portion 60 and maximum open position adjusting portion 80.

The fixed blade 5 is made of metal and have a plate shape with a constant thickness. The fixed blade 5 includes a hole (not illustrated), through which a pivot portion 46 is inserted, substantially at the center. The fixed blade 5 is provided with a fixed blade support base portion 52 at one side (the housing 2 side) of the hole, and fixed blade-side blade portion 51 is provided in the other side (distal end side opposite to the housing 2) of the hole. The length from the pivot portion 46 of the fixed blade support base portion 52 to the distal end of the fixed blade support base portion 52 is smaller than the length from the pivot portion 46 of the fixed blade-side blade portion 51 to the distal end of the fixed blade-side blade portion 51.

The fixed blade support base portion 52 is fixed to the housing 2 by the fixing portion 56 such that the thickness direction is a left-right direction (i.e., the depth direction in FIG. 1) and the fixed blade cutting portion 53 of the fixed blade-side blade portion 51 faces upward (i.e., faces the movable blade 4 side). The fixed blade-side blade portion 51 is provided, on a side facing the movable blade 4, with a curved fixed blade cutting portion 53 with a center concaved with respect to the fixed blade support base portion 52.

The movable blade 4 is a substantially L-shaped plate made of metal, and is provided with a shaft receiving hole 42 substantially at the center. The movable blade 4 is arranged so as to overlap with the fixed blade 5 in the thickness direction, and is pivotally supported by the pivot portion 46 inserted into the shaft receiving hole 42 so as to be able to turn with respect to the fixed blade 5.

The movable blade 4 includes the movable blade body portion 43 serving as one leg of the substantially L-shape, a movable-side blade portion 41 serving as the other leg, and the pivot portion 46 interposed therebetween. The movable blade body portion 43 has, at an end portion thereof, the drive connection portion 44 into which the drive shaft 47 connected to the link rod 11 is inserted. Note that the movable blade body portion 43 is provided in a direction in which a substantially L-shape is formed together with the movable-side blade portion 41, but is not limited thereto. The movable blade body portion 43 can be provided in an appropriate direction different from the movable-side blade portion 41 as viewed from the pivot portion 46, such as in a direction opposite to or in a direction at a different angle with respect to the movable-side blade portion 41 as viewed from the pivot portion 46.

In the electric pruning shears 1 configured as described above, a user presses a cutting operation portion 60 to press an internal press sensor 62, then pressing force is converted into an electric signal and the electric signal is transmitted to the control board 109, and the control board 109 instructs a motor 6 to rotate at a rotation speed corresponding to the pressing force. When the motor 6 rotates, the screw shaft 15 of the ball screw unit 3 rotates via the speed reducer 27, whereby the nut 13 is slid in the advancing/retracting direction. The movement of the nut 13 is transmitted to the movable blade body portion 43 of the movable blade 4 by the link rod 11, and the movable blade 4 turns about the pivot portion 46. In this manner, the movable-side blade portion 41 of the movable blade 4 and the fixed blade-side blade portion 51 of the fixed blade 5 function as shears, and cut an object to be cut such as a branch.

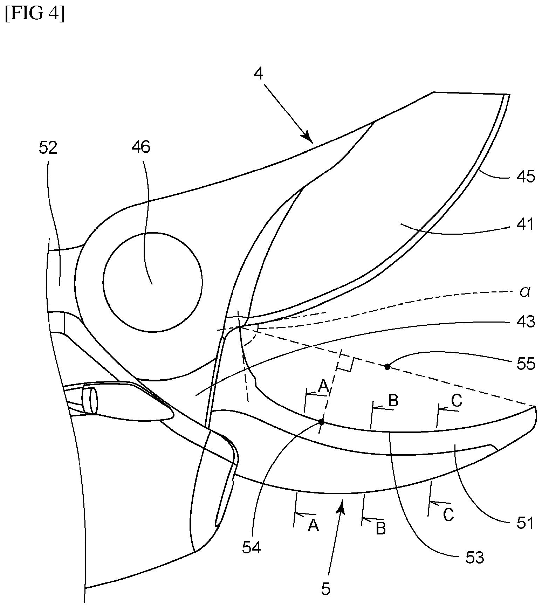

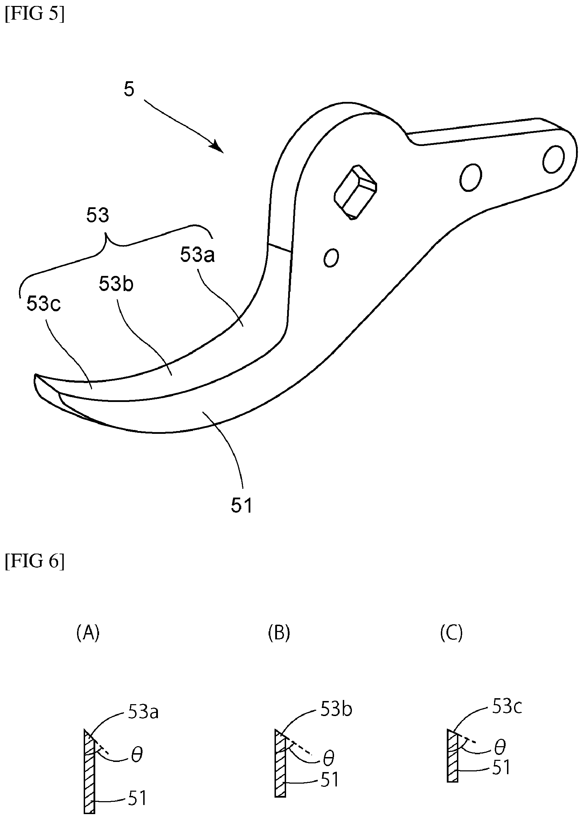

FIG. 4 is an enlarged view of a cutting portion of the electric pruning shears 1. FIG. 5 is a perspective view illustrating a shape of the fixed blade cutting portion 53 of the fixed blade 5. FIG. 6 is a set of sectional views of the fixed blade-side blade portion 51 at each position in FIG. 4. FIG. 6(A) is a sectional view taken along line A-A on the pivot portion 46 side, FIG. 6(B) is a sectional view taken along line B-B at or near the center, and FIG. 6(C) is a sectional view taken along line C-C on the blade edge side.

As illustrated in FIG. 4, in the fixed blade cutting portion 53, a maximum concave portion 54 that is the most concave point is arranged closer to the proximal end of the fixed blade-side blade portion 51 than the center point 55 from the proximal end to the distal end of the fixed blade-side blade portion 51 is. The concave-shaped curve of the fixed blade cutting portion 53 is formed such that at least the curvature on the base portion side is greater than the curvature from the maximum concave portion 54 to the distal end.

As illustrated in FIG. 5 and FIGS. 6(A) and 6(B), the fixed blade cutting portion 53 is formed such that a bevel angle θ gradually becomes obtuse from the base portion-side cutting portion 53a on the pivot portion 46 side toward the distal end-side cutting portion 53c on the distal end side. The bevel angle θ of the central cutting portion 53b at the center is about an intermediate value between the bevel angle of the base portion-side cutting portion 53a and the bevel angle of the distal end-side cutting portion 53c. In this embodiment, the bevel angle θ of the fixed blade cutting portion 53 of the fixed blade-side blade portion 51 gradually becomes acute as a whole from the distal end toward the pivot portion 46 side, and the entire fixed blade cutting portion 53 serves as a bevel angle changing portion. Specifically, the bevel angle θ of the distal end-side cutting portion 53c is 65 degrees, the bevel angle θ of the central cutting portion 53b is 55 degrees, and the bevel angle θ of the base portion-side cutting portion 53a is 45 degrees. Note that the present invention is not limited to the above. The present invention can adopt a configuration including a bevel angle changing portion in which the bevel angle θ gradually becomes acute at least in the vicinity of the pivot portion 46 (particularly, an intersection in a state where the movable blade 4 and the fixed blade 5 are maximally opened). The bevel angle θ in the bevel angle changing portion changes gradually without a step. With this configuration, when it is sought to bring a thick branch or the like into contact with the fixed blade cutting portion 53 on the pivot portion 46 side to cut a thick branch or the like, the fixed blade cutting portion 53 having an acute angle firmly bites into the thick branch or the like, and the blade slippage can be prevented by the sandwiching operation. Thereafter, since the bevel angle θ is an obtuse angle, chips and the like in the blade can be prevented, and even the thick branch can be satisfactorily cut.

As illustrated in FIG. 4, the movable-side blade portion 41 is formed such that an intersection angle α with the fixed blade-side blade portion 51 is 80 degrees or more when the movable blade 4 are maximally opened. Further, the movable blade cutting portion 45 curved with the center convexed toward a side facing the movable blade cutting portion 45 is provided, and is formed to be sharp from the pivot portion 46 side toward the distal end. The length from the pivot portion 46 of the fixed blade support base portion 52 to the distal end of the fixed blade support base portion 52 is smaller than the length from the pivot portion 46 of the fixed blade-side blade portion 51 to the distal end the fixed blade-side blade portion 51.

With the configuration described above, the electric pruning shears 1 are capable of satisfactorily performing cutting without blade slippage even when the object to be cut is a thick branch.

Specifically, the fixed blade cutting portion 53 of the fixed blade 5 is formed such that the bevel angle of the fixed blade-side blade portion 51 on the base portion side is the most acute angle. Thus, when the object to be cut such as a thick branch is brought into contact with the vicinity of the intersection (on the base portion side) of the fixed blade 5 and the movable blade 4, and the trigger button 61 of the cutting operation portion 60 is pushed down, the movable blade 4 operates and sandwiches the object to be cut between the operated movable blade 4 and the fixed blade 5. At this time, the acute angle portion of the fixed blade-side blade portion 51 on the base portion side firmly bites into the object to be cut. Therefore, blade slippage can be prevented from occurring when the object to be cut cutting is brought into contact with the vicinity of the intersection (base portion side) between the fixed blade 5 and the movable blade 4 and is cut, thereby making it possible to comfortably perform cutting at a desired cutting position.

In detail, a thick branch is harder as a whole than a thin branch and requires greater cutting force to cut than a thin branch. For this reason, in order to cut a thick branch, it is preferable to cut the branch at a position as close as possible to the intersection where the fixed blade 5 and the movable blade 4 of the electric pruning shears 1 intersect each other, in other words, at a position as close as possible to the pivot portion 46 because greater cutting force can be easily obtained by the principle of leverage. Here, when it is sought to bring the thick branch as close as possible to the pivot portion 46, the thick branch to be cut is naturally brought into contact with the fixed blade-side blade portion 51 of the fixed blade 5 and the movable blade-side blade portion 41 of the movable blade 4 at a position as close as possible to the pivot portion 46 in a state where the movable blade 4 is opened as much as possible with respect to the fixed blade 5. At this time, it is sought to start cutting of a thick branch from a state where the movable blade 4 and the fixed blade 5 are maximally opened. Therefore, the thick branch is likely to receive force with which the thick branch is pushed out in a direction away from the pivot portion 46 by the movable blade 4 and fixed blade 5 intersecting each other, rather than force with which the thick branch is sandwiched in the up and down direction. Accordingly, blade slippage is likely to occur. Since the thick branch is moved away from the pivot portion 46 while the blade slippage occurs in this manner, the position of the thick branch is farther from the pivot portion 46 than a position at the beginning when the blade slippage stops and the cutting is started, and the force that can be applied by the principle of leverage is weakened. Accordingly, the motor 6 that is driven for cutting the thick branch receives a large load.

In view of such circumstances, since the bevel angle of the fixed blade-side blade portion 51 according to the present embodiment on the base portion side is an acute angle, it is easy to bite into a thick branch while preventing blade slippage, and cutting can be started without the thick branch being so far away from the pivot portion 46. Therefore, the force that can be applied by the principle of leverage is increased, and the load on the motor 6 that is driven for cutting can be reduced. Moreover, the fixed blade-side blade portion 51 is formed such that the curvature on the base portion side is greater than that on the distal end side, or that at or near the center (particularly, in the fixed blade-side blade portion 51, the region from a step portion to the base end side is formed to have a greater curvature than the region from the step portion to the distal end side). Thus, the intersection angle α between the fixed blade-side blade portion 51 and the movable blade-side blade portion 41 changes quickly to become more acute. Therefore, blade slippage when the fixed blade-side blade portion 51 starting to bite into an object a little can be prevented from occurring. Further, it is possible to shorten the period from when the fixed blade-side blade portion 51 on the base portion side starts to bite into a thick branch until the force for shearing with the fixed blade-side blade portion 51 and the movable blade-side blade portion 41 starts to be exerted. As a result, the load on the motor 6 can be reduced as much as possible, and the thick branch can be cut in as short a time as possible without chips in the blade.

In addition, by reducing the load on the motor 6, the generation of heat from the motor 6 can be suppressed, and the consumption of the battery can also be reduced. Therefore, the usable time in the battery can be extended.

In addition, the bevel angle θ of the fixed blade-side blade portion 51 has a bevel angle changing portion in which the bevel angle gradually becomes obtuse from the base portion side toward the distal end. Thus, even an acute angle portion when biting into the surface layer of the object to be cut becomes an obtuse angle portion as it bites deeper into the object to be cut. As a result, the blade edge of the fixed blade-side blade portion 51 at the biting portion can be prevented from being deformed and damaged. In addition, since the bevel angle on the distal end side is an obtuse angle compared to the base portion side, the blade on the distal end side can be prevented from being chipped while achieving prevention of blade slippage with respect to a thick branch.

Further, the intersection angle α between the fixed blade-side blade portion 51 and the movable blade-side blade portion 41 is set to be as large as 80 degrees or more. Thus, even if the object to be cut is a thick branch, the branch can be easily sheared in accordance with the principle of leverage by the movable-side blade portion 41 and the fixed blade-side blade portion 51.

In addition, since the curvature of the fixed blade-side blade portion 51 on the base portion side is greater than the curvature from the maximum concave portion 54 to the distal end, the object to be cut can be hold firmly and cut without blade slippage. Specifically, the acute angle portion of the fixed blade-side blade portion 51 on the base portion side bites into the surface layer of the object to be cut in a state where the intersection angle α between the fixed blade-side blade portion 51 and the movable-side blade portion 41 is large. Then, as the closing operation proceeds, the intersection angle α immediately decreases and the bevel angle of the fixed blade-side blade portion 51 in contact with the object to be cut immediately becomes obtuse. Therefore, the acute angle portion of the fixed blade-side blade portion 51 firstly bites into the object to be cut, and then immediately shifts to the obtuse angle portion of the fixed blade-side blade portion 51, thereby reliably achieving cutting without chips and the like in the blade.

Since the movable-side blade portion 41 is a convex surface with respect to the fixed blade 5 and the fixed blade-side blade portion 51 is a concave surface with respect to the movable blade 4. Since curvatures of these curves are substantially the same, an object to be cut such as a branch can be sandwiched and cut between the movable blade cutting portion 45 of the movable-side blade portion 41 turned in the closing direction and the fixed blade cutting portion 53 of the fixed blade-side blade portion 51.

In addition, the user can slowly push down the trigger button 61 of the cutting operation portion 60. The press sensor 62 can detect a change in the pressing force to slowly start the closing operation of the movable-side blade portion 41. This makes it possible for the fixed blade cutting portion 53 having an acute angle to bite into the thick branch or the like more reliably. In other words, by slowly closing at first, the movable-side blade portion 41 firmly bites into the surface of the thick branch or the like, and blade slippage can be prevented. When the trigger button 61 is firmly pressed during usage, the movable-side blade portion 41 can be quickly caused to operate in the closing direction, so that the subsequent cutting operation can be performed in a short time.

In addition, since the initial open/close position can be changed by the maximum open position adjusting portion 80, cutting can be performed at an appropriate initial open/close position in accordance with the thickness of the object to be cut. Specifically, when a thick object to be cut is cut, a portion where the bevel angle of the fixed blade-side blade portion 51 on the base portion side is acute is brought into contact with the object to be cut, at the initial open/close position in the maximally opened state where the intersection angle α is large, and the object to be cut can be satisfactorily cut without blade slippage by causing the acute angle portion to bite thereinto. Further, when a thin object to be cut is cut, the object to be cut is brought into contact at a position of the fixed blade-side blade portion 51 close to the base portion side at the initial open/close position in the minimally opened state where the intersection angle α is small, and the object to be cut can be cut by pressing the cutting operation portion 60. At the initial open/close position in the minimally opened state where the intersection angle α is small, the movable blade 4 and the fixed blade 5 are closed to some extent, and thus the position of the intersection angle α moves to the blade edge side as compared with the position of the intersection angle α in the maximally opened state. Accordingly, a portion where the bevel angle of the fixed blade-side blade portion 51 is acute is hidden by the movable blade 4 to some extent, and the object to be cut is less likely to be brought into contact with the acute angle portion. Therefore, it is possible to use the acute angle portion where chips and the like in the blade is likely to occur as compared with the obtuse angle portion, in a state of not being in contact with a thin object to be cut, whereby the useful life can be prolonged.

In addition, the fixed blade 5 on the base portion side has the most acute angle and that on the distal end side has the most obtuse angle. Thus, initial blade slippage with respect to a thick branch can be prevented and chips and the like in the blade can be prevented during cutting. Moreover, since the fixed blade 5 have a portion where the bevel angle changes gradually, the operation of shearing while preventing blade slippage can be satisfactorily completed from the initial biting of the blade to the completion of cutting, including the period during cutting when the load increases.

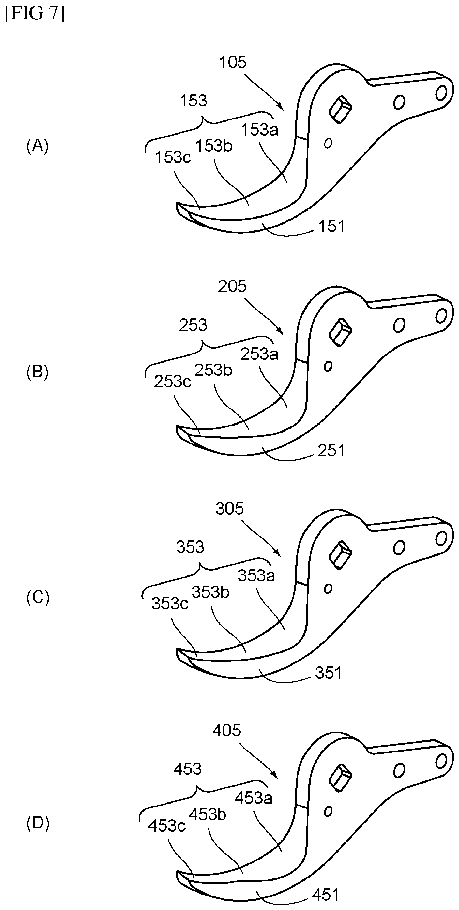

FIG. 7 is an explanatory view illustrating configurations of fixed blades 105 to 405 of the second to fifth embodiments. In these embodiments, the configurations other than the fixed blades 105 to 405 is the same as those of the first embodiment, and thus the detailed description thereof will be omitted.

### Second embodiment

In the fixed blade 105 of the second embodiment, as illustrated in FIG. 7(A), the bevel angle of the fixed blade cutting portion 153 gradually changes from the base portion-side cutting portion 153a on the pivot portion 46 side (see FIG. 1) to the distal end-side cutting portion 153c on the distal end side. In the second embodiment, the bevel angle of the base portion-side cutting portion 153a is 35 degrees, the bevel angle of the central cutting portion 153b is 50 degrees, and the bevel angle of the distal end-side cutting portion 153c is 65 degrees. Also in this configuration, the similar functions and effects as those of the first embodiment can be obtained.

### Third embodiment

In the fixed blade 205 of the third embodiment, as illustrated in FIG. 7(B), the bevel angle of the fixed blade cutting portion 253 is fixed from the base portion-side cutting portion 253a on the pivot portion 46 side (see FIG. 1) to the central cutting portion 253b of the central portion. Further, the bevel angle of the fixed blade cutting portion 253 gradually changes from the central cutting portion 253b to the distal end-side cutting portion 253c on the distal end side. In the third embodiment, the bevel angle of the base portion-side cutting portion 253a is 45 degrees (that is, assuming the total length of the blade of the fixed blade 5 is 60 mm, the bevel angle at a portion at about 20 mm from the base portion side is always constant at 45 degrees). The bevel angle of the central cutting portion 253b is also 45 degrees (that is, the bevel angle at a portion from the base portion-side cutting portion 253a to 20 mm therefrom toward the distal end side is always constant at 45 degrees). Further, the bevel angle of the distal end-side cutting portion 253c is 65 degrees (that is, the bevel angle at a portion from the central cutting portion 253b to 20 mm therefrom toward the distal end side gradually changes from 45 degrees to 65 degrees). Also in this configuration, the similar functions and effects as those of the first embodiment can be obtained.

### Fourth embodiment

In the fixed blade 305 of the fourth embodiment, as illustrated in FIG. 7(C), the bevel angle of the fixed blade cutting portion 353 gradually changes from the base portion-side cutting portion 353a on the pivot portion 46 side (see FIG. 1) to the central cutting portion 353b. Further, from the central cutting portion 353b to the distal end-side cutting portion 353c on the distal end side, the bevel angle of the fixed blade cutting portion 353 changes gradually but steeply than the portion from the base portion-side cutting portion 353a to the central cutting portion 353b. In the fourth embodiment, the bevel angle gradually changes at a rate of 1 degree per 1 mm from the base portion-side cutting portion 353a to the center of the central cutting portion 353b (that is, about 30 mm from the base portion side to the center). Further, the bevel angle gradually changes at a rate of 1.8 degrees per 1 mm from the center of the central cutting portion 353b to the distal end-side cutting portion 353c (that is, about 30 mm from the center to the distal end). Therefore, when the length (linear distance) of the blade is 60 mm, the opening angle (intersection angle α) of the blades at the initial open/close position is about 84 degrees. Also in this configuration, the similar functions and effects as those of the first embodiment can be obtained.

### Fifth embodiment

In the fixed blade 405 of the fifth embodiment, as illustrated in FIG. 7(D), the bevel angle of the fixed blade cutting portion 453 is fixed from the base portion-side cutting portion 453a on the pivot portion 46 side (see FIG. 1) to the central cutting portion 453b of the central portion. Further, the bevel angle of the fixed blade cutting portion 453 gradually changes from the central cutting portion 453b to the distal end-side cutting portion 453c on the distal end side. In the fifth embodiment, the bevel angle of the base portion-side cutting portion 453a is always 45 degrees (that is, the bevel angle at a portion from the base portion side to about 20 mm therefrom is always constant at 45 degrees). The bevel angle of the central cutting portion 453b is changed from 45 degrees to 65 degrees (that is, the bevel angle in the range of 20 mm that is the central cutting portion 453b is gradually changed from 45 degrees to 65 degrees). Further, the bevel angle of the distal end-side cutting portion 453c is fixed to 65 degrees (that is, the bevel angle at a portion from the distal end to 20 mm therefrom is always constant at 65 degrees). That is, the bevel angles on the base portion side and on the distal end side are respectively fixed, and the bevel angle is gradually changed at or near the central portion. Also in this configuration, the similar functions and effects as those of the first embodiment can be obtained.

### Sixth embodiment

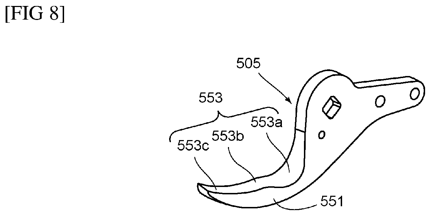

In the fixed blade 505 of the sixth embodiment, as illustrated in FIG. 8, the fixed blade cutting portion 553 is formed to have different curvatures as follows: the curvature of the blade line (blade edge line) from the base portion-side cutting portion 553a on the pivot portion 46 side (see FIG. 1) to the central cutting portion 553b of the central portion is set to be large as a large curvature portion; and the curvature of the blade line from the central cutting portion 553b to the distal end-side cutting portion 553c on the distal end side is set to be small as a small curvature portion. In this case, the blade line of the fixed blade cutting portion 553 is a concave curved blade line in the large curvature portion and the small curvature portion, but is a convex curved blade line therebetween. Furthermore, in the sixth embodiment, the bevel angle is gradually changed from the base portion side to the distal end side such that the bevel angle of the base portion-side cutting portion 553a is the acutest (for example, 45 degrees) and the bevel angle of the distal end-side cutting portion 553c is the obtusest (for example, 65 degrees). Also in a case where the curvature of the blade line is changed as described above, the similar functions and effects as those of the first embodiment can be obtained.

As to the present invention and embodiments, the first blade according to the present invention corresponds to the movable blade 4 according to the embodiment, and likewise,
the second blade corresponds to the fixed blades 5, 105, 205, 305, 405, and 505,
the first blade portion corresponds to the movable-side blade portion 41,
the second blade portion corresponds to the fixed blade-side blade portion 51,
the first support base portion corresponds to the movable blade body portion 43,
the second support base portion corresponds to the fixed blade support base portion 52,
the drive source corresponds to the motor 6, and
the power transmitter corresponds to the link rod 11.

However, the present invention is not limited to only the configuration of the above-described embodiment, and many embodiments can be obtained.

For example, in the present embodiment, a ball nut is used for the drive unit, but any method may be employed as long as the rotational movement from the motor 6 can be converted into the opening/closing movement of the movable blade 4. For example, a plurality of gears may be simply combined to convert the rotation of the motor into the opening/closing movement of the movable blade 4.

The electric pruning shears 1 according to the present embodiment include the button cutting operation portion 60 that causes the movable blade 4 to move and the maximum open position adjusting portion 80 that can adjust the maximum opening angle of the movable blade 4, but the present invention is not limited to this configuration. For example, only the cutting operation portion 60 for causing the movable blade 4 to move may be included. Additionally, the cutting operation portion 60 may be a trigger type instead of a button type.

Alternatively, the following configuration may be adopted. The cutting operation portion 60 is a button type. When the button is pressed, the switch may be turned ON, and the control board 109 may cause the motor 6 to rotate, thereby causing the movable blade 4 to move. In this case, preferably, the closing operation is started slowly at first and increase the speed from the midway stage. with this configuration, high-speed cutting can be performed after the acute angle portion is slowly and firmly bitten into the thick object to be cut at the maximum opening position.

In addition, in the present embodiment, the maximum open position adjusting portion 80 is arranged in front of the cutting operation portion 60. However, the arrangement of the maximum open position adjusting portion 80 and the cutting operation portion 60 may be appropriately replaced on the manufacturing side.

Furthermore, the fixed blade 5 can have a configuration in which the bevel angle gradually changes at least in part (in particular, the bevel angle gradually changes from the base portion to the distal end so as to become obtuse), thereby making it possible to achieve the functions and effects of the first embodiment described above. Therefore, various configurations other than the above-described embodiments can be adopted.

### Industrial Applicability

The present invention can be used in an industry of a mechanical tool having a cutting function and used for pruning plants and the like.

### Reference Signs List

- 1: electric pruning shears
- 4: movable blade
- 5: fixed blade
- 6: motor
- 11: link rod
- 41: movable blade-side blade portion
- 43: movable blade support base portion
- 46: pivot portion
- 51: fixed blade-side blade portion
- 52: fixed blade support base portion
- 54: maximum concave portion
- 55: center point
- 109: control board
- α: intersection angle

## Claims

1. Electric pruning shears comprising:
a first blade;
a second blade; and
a pivot portion configured to pivotally support the first blade and/or the second blade in a relatively rotatable manner,
wherein the first blade includes:
a first blade portion that is to be brought into contact with an object to be cut and is configured to cut the object to be cut; and
a first support base portion extended in a direction different from the first blade portion as viewed from the pivot portion,
the second blade includes:
a second blade portion that is to be brought into contact with the object to be cut and is configured to cut the object to be cut by sandwiching the object to be cut together with the first blade portion; and
a second support base portion extended in a direction different from the second blade portion as viewed from the pivot portion,
the first blade portion is a convex curved blade with an intermediate portion from the pivot portion side to a distal end convexed,
the second blade portion is a concave curved blade with an intermediate portion from the pivot portion side to a distal end concaved,
a drive source configured to turn at least one of the first support base portion and the second support base portion to relatively open or close the first blade portion and the second blade portion is included, and
the second blade portion includes, in at least a part of the second blade portion, a bevel angle changing portion, a bevel angle of which gradually becomes acute with respect to a bevel angle on the distal end side.

2. The electric pruning shears according to claim 1, further comprising:
an operation portion configured to receive operation of a user; and
a control unit configured to actuate the drive source in accordance with the operation on the operation portion,
wherein the control unit is configured to perform opening/closing operation processing of actuating the drive source to relatively open or close the first blade portion and the second blade portion when first operation is performed on the operation portion, and
the opening/closing operation processing is configured to change a speed of the opening/closing operation in accordance with an operation method of the first operation.

3. The electric pruning shears according to claim 2, wherein the control unit is configured to perform initial open/close position switching processing of switching initial open/close positions of the first blade portion and the second blade portion before the opening/closing operation when the second operation is performed on the operation portion.
